# EUROPEAN PATENT SPECIFICATION

(11) **EP 3 079 935 B1**
(45) Date of publication and mention of the grant of the patent: **30.05.2018**
(21) Application number: 14821277.2
(22) Date of filing: 08.12.2014
(51) Int. Cl.: B60K 15/04

(54) **SAFETY LOCK CLOSURE DEVICE FOR FUEL TANKS**
SICHERHEITSSCHLOSSVERSCHLUSSVORRICHTUNG FÜR KRAFTSTOFFTANKS
DISPOSITIF DE FERMETURE À VERROU DE SÉCURITÉ POUR RÉSERVOIRS DE CARBURANT

(30) Priority: 11.12.2013 IT VR20130277
(43) Date of publication of application: 19.10.2016
(73) Proprietor: Active Fuel S.r.l., 35010 Campo San Martino (PD) (IT)
(72) Inventor: VETRUGNO, Michelangelo, I-35142 Padova (IT)
(86) International application number: PCT/IB2014/002737
(87) International publication number: WO 2015/087147

(56) References cited:
- DE-C- 939 489
- FR-A1- 2 934 213
- GB-A- 2 451 711

## Description

The present invention relates to a closure device with safety lock for fuel tanks.

In particular, the present invention is advantageously applicable to inlets of fuel tanks of industrial vehicles, such as industrial vehicles for the transport of goods, such as trucks, trailer trucks, articulated vehicles, vehicles for construction, or vehicles for the transport of persons such as buses, courier and equivalent, or even of fuel tanks for boats, such as ships, boats and the like, which the following description will make explicit reference without thereby losing in generality, in order to make a closure with safety locking against the unauthorized accesses and forced entries at the same tanks.

In general, in industrial vehicles the fuel tanks (fuel oil) are located externally and just below the relative loading platform, and have deck fillers and fuel inlet pipe unions usually arranged in correspondence with an upper part of the tanks and substantially inclined axis respect to the vertical.

The angle of axial inclination of said pipes varies depending on the choice of the manufacturer in order to allow the adaptation of the tanks at more or less accentuated the loading platform relative to the ground, and at the same time allowing an optimal and effective insertion in the same union pipes of the known dispensing fuel nozzle guns during refueling operations.

Currently, the arrangement with inclined axis of the cited pipe unions causes significant drawbacks.

Indeed, the known closure cap devices provided with various anti-theft systems and adapted to prevent unwanted accesses and forced entries to the tanks, with consequent risk of theft of fuel, for example during overnight stops of vehicles, can not be validly installed on these pipe unions with an inclined axis and further in vehicles with low floor which and generally with axial development.

Therefore, during refueling operations, these devices make it necessary to use fuel dispensing guns in an inclined position that is inefficient, uncomfortable and especially insecure, with a risk of leakage of the fuel nozzle guns from the same pipe unions.

Moreover, in case of low loader it's often necessary to temporarily remove the tanks in order to install anti-theft devices.

Furthermore, the known devices are not able to guarantee a complete anti-intrusion barrier, with the consequence that it can not avoid the occurrence of theft of large amount of fuel, although in many cases not allow the complete emptying of the tanks. Document FR 2 934 213 describes a safety lock closure device according to the preamble of claim 1.

The object of the present invention is to eliminate the significant and serious drawbacks of the known art mentioned above.

In particular, an object of the present invention is to provide a closure device for tanks able to eliminate the possibility of unauthorized accesses and forced entries to the tanks such as to cause fraudulent levies of fuel.

Another object of the present invention is to provide a closure device can be easily installed on any type of tank mounted on an industrial vehicle, without having to temporarily remove the tank.

The structural and functional characteristics of the present invention and its advantages over the known art will be clearer and more evident from the claims below, and in particular by an examination of the description that follows, referring to the accompanying drawings, which show the schematization of some preferred but non-limiting embodiments of a closure device in which:
- Figure 1 is an exploded view of a preferred embodiment of the closure device in object;
- Figures 2a and 2b are, in respective views partly in section, two different operating positions of the closure device in object;
- Figures 3a and 3b represent, respectively, a nozzle for fuel in two positions, one of which is operative dispensing and the other non-functional, and a sectional view of a tank of an industrial vehicle on which is mounted the device in object to the present invention;
- Figures 4a and 4b represent, in respective views partly in section and with parts removed for clarity, the device of Figure 1 in two different operating positions;
- Figure 4c is another view of the device in object in the position of figure 4a;
- Figures 5a to 5d illustrate in various different operating positions of installation and release, in enlarged scale, a detail of a first variant of the device of Figure 1;
- Figures 6a 6e illustrate, in exploded view and in front view, a detail of a second variant of the device of Figure 1;
- Figures 7a to 7d show in plan view different operative positions of the detail of Figures 5 and 6; and
- Figures 8a to 8g illustrate, respectively, exploded, sectional plan and partly in elevation, different operating positions of another component of the subject device to the present invention.

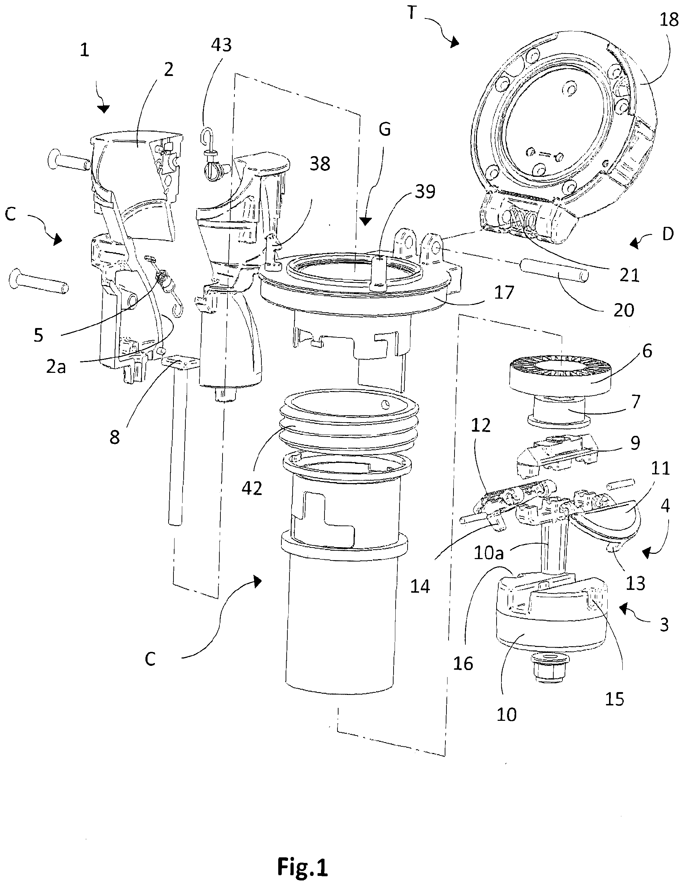

With reference to figure 1, 2a, 2b and 3b, D globally indicates a closing device adapted to be installed on a filler pipe union B with an inclined axis (angle α relative to the vertical) of a fuel tank S of a vehicle V, a load platform of which is indicated with P.

The device D is composed of a substantially cylindrical body G adapted to be fixedly mounted on the filler pipe B and fitted on top with cover means T with automatic safety closure system.

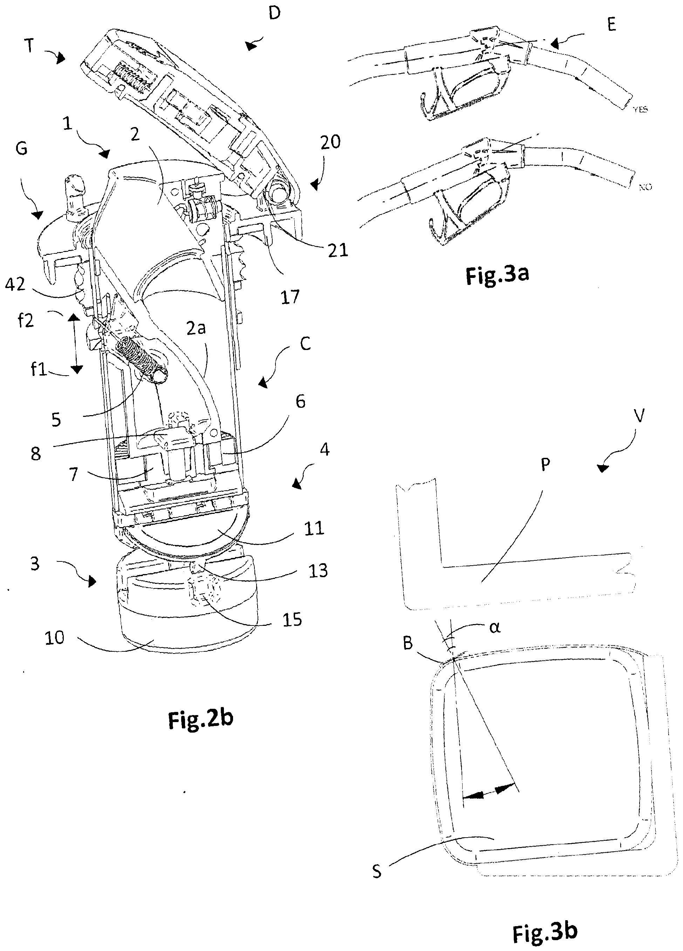

The body G brings centrally and inside mounted a substantially hollow tubular element C, which comprises ad upper portion 1, preferably made in two identical half-shells coupled together as shown in Figure 1, and variously hollow adapted to define a mouth or input seat 2 for entering a known dispensing fuel gun E (Fig. 3a), and a lower portion 3 provided with a floating-type safety lock group 4.

The input seat 2 has its own longitudinal axis X extending inclined at an angle β less than 35° with respect to the longitudinal axis Y of the element C: preferably, but not limited to, such angle β takes a value equal to 28°.

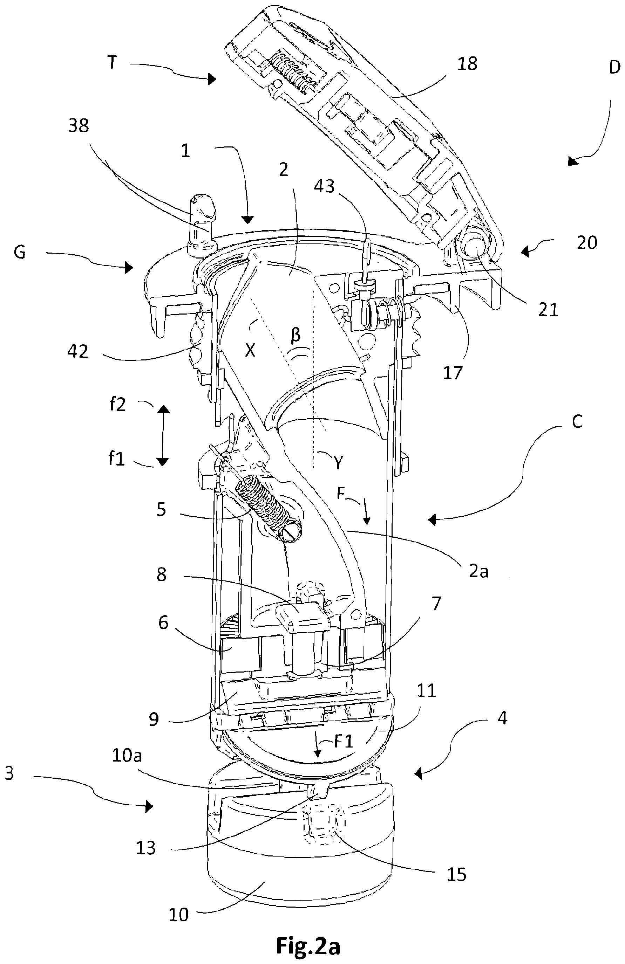

The cited element C is slidably mounted coaxially and vertically on the body G (arrows f1 / f2 - Figures 2a and 2b) so as to move, in use, upward during opening of the lid T due to the elastic action of elastic means 5, preferably but not limited to, of a spring type, or alternatively of the tie-rod type, and thus to allow the insertion of the gun E in the seat 2.

In this way, thanks to the presence of the seat 2 with an inclined axis together with the element C vertically slidable on the body G, in use it's perfectly guaranteed an optimal and effective insertion of the dispensing gun E in the seat 2 in its operating position for dispensing (Fig. 3a - YES), in other words substantially horizontally combining the aforementioned angles α and β of filler pipe B and seat 2, and with a small footprint, thus enabling a more agile insertion of the gun E in the device D between the plaform P and the tank S without impacting, and be hampered by, said platform P.

The input seat 2 also has an own bottom 2a with a curved and expanded development, with the concavity facing centrally to the element C, and on which the fuel flows out of the gun E, in such a way that the flow F of the fuel is forced to an abrupt change of direction in order to assume a trajectory with the same inclination of the filler pipe B and with a pressure reduction such as to prevent the snap lock of the dispensing gun E.

Moreover, it's to be highlighted that the curved profile of the part 2a has been studied to act as a physical intrusion barrier in order to avoid the possibility of fuel theft by means of tubes through which sucking the fuel present in the upper part the tank S.

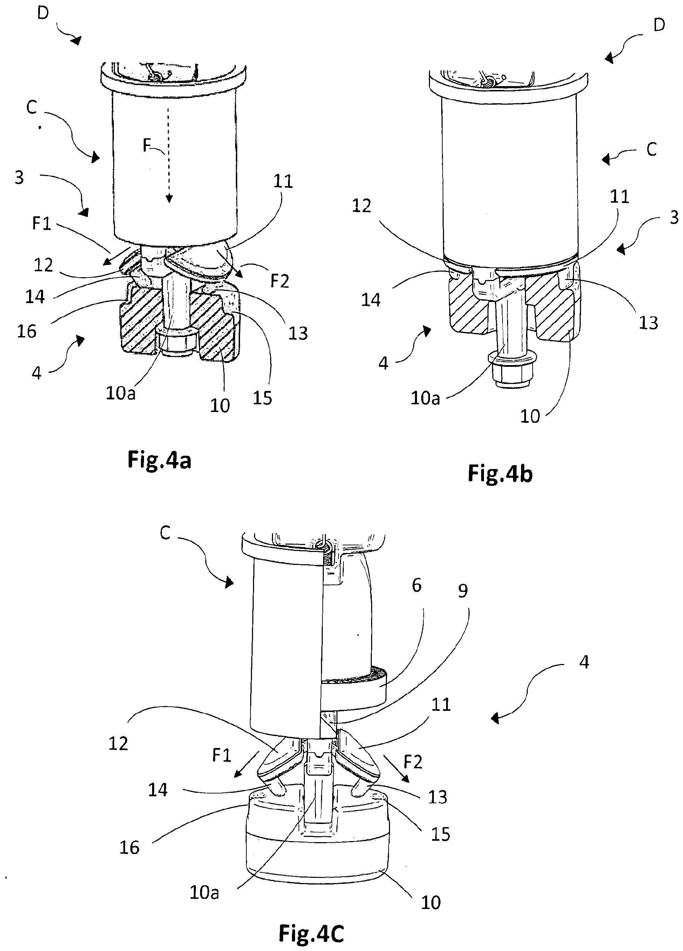

A further physical anti-intrusion / anti-theft/ anti-burglary barrier is defined by a metal crown 6 mounted on a central pin 7, in turn locked to the part 2a of the element C by locking means 8, and imprisoned inside the element C so as to let flow the fuel without slowing it down towards an extruded triangular shape corros-section element 9 mounted on the pin 7 and adapted to divide and split the flow F of the fuel into two equal sub-flows F1 and F2 (Fig. 4c).

As also shown in Figures 1,2a and 2b, and 3a to 3c, the safety group 4 comprises a float 10 which is slidably mounted on a square section element 10a and supports two elements or wings 11 and 12 with semicircular shape, each of which wings 11,12 is hinged through plugs to element 10a and, on the opposite side, is provided with a radial protrusion 13,14 adapted to cooperate with a relative seat 15,16 of the float 10 to enter, slide, and finally block in said seat 15,16.

In use, with empty tank, due to gravity, the two wings of 11,12 and the float 10 are disposed in the position illustrated in Figure 4a so as to allow the passage and the introduction of the fuel into the tank S.

During the filling steps, within the element C of the device D, the two sub-flows F1 and F2, defined by the division of the flow F through the element 9 with triangular shape section, generate a hydrostatic pressure that keeps open the passage even when the float 10 is submerged by the fuel.

The interruption of the filling terminates the predominance of the hydrostatic pressure, allowing the float 10 to go up.

Therefore, the two protrusions 13, 14 pushed upwards by the float 10 are able to be inserted and to lock in the seats 15 and 16 (Fig. 4b).

A break-in attempt that wanted to access to the tank S via a thin tube should push on one of the two wings 11,12 bringing it in rotation, but this movement is prevented by the presence of the float 10 which infact blocks the wings 11 and 12 in the seats 15 and 16.

At the fall of the fuel level, the float 10 no longer immersed in the fuel flows down thereby releasing the wings 11 and 12 (Fig.4c).

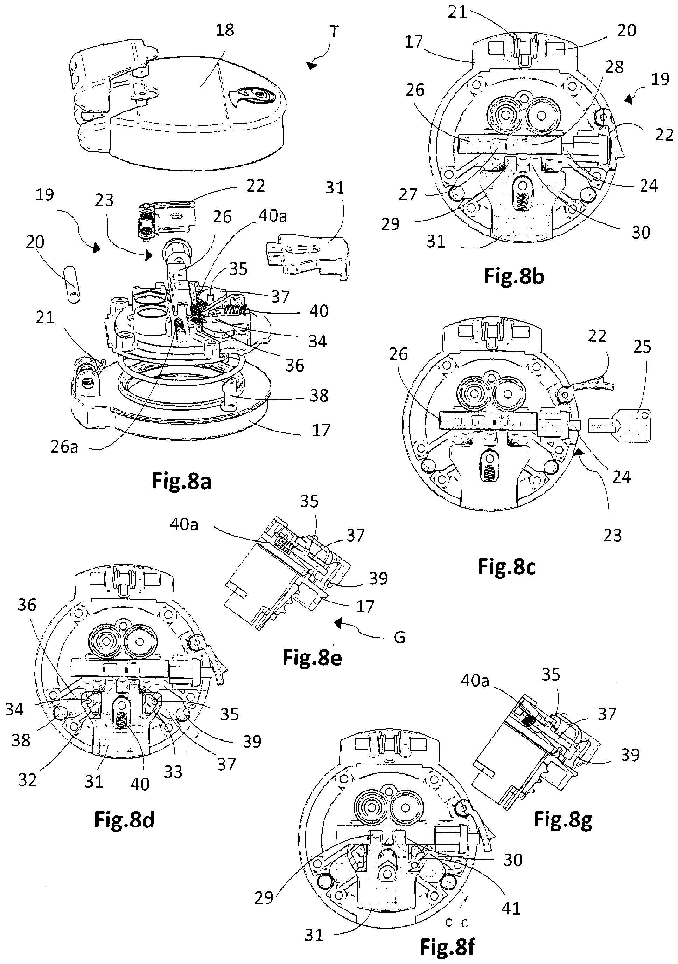

As shown in Figures 8a to 8g, the cover means T consist substantially of two parts: a fixed plate 17 forming part of the body G of the device D and an hollow cable cover 18, which is adapted to interact with a stop and block pin 38 placed on the plate 17, and contains a plurality of locking safety mechanisms generally indicated by reference number 19.

The cover 18 is hinged to the plate 17 by hinge means 20 for rotating between an open position and a closing of the device D via the interposition of contrast spring means 21.

The aforementioned mechanisms 19 comprise a flap 22 adapted to be rotated for access to a lock 23 of button-type 24, in which a key 25 is inserted and rotated in order to snap the lock and determine the axial sliding of said button 24.

A bolt 26 follows the movement of the button 24 and then act to scroll horizontally from left to right in Figure 8c at the time of the release. The bolt 26 is kept always pushed against the lock by a spring 26a (Fig. 8a).

In this situation, the bolt 26 aligns two seats 27 and 28 which can accommodate two teeth 29 and 30 present in a release button 31.

Therefore, in use, through the pressure on release button 31, this button 31 will move back bringing the two teeth 29 and 30 in their respective seats 27 and 28 present in the bolt (Figures 8b and 8f). The above-mentioned release button 31 is provided in the lower side of two inclined planes 32 and 33, each of which is adapted to engage a corresponding cylindrical pin 34,35 connected to a respective shaped plate 36,37 (Fig.8A and 8d).

The plates 36 and 37 are contained laterally shaped and arranged according to an axis inclined with respect to that of the release button 31.

The retraction of the release button 31 through the inclined planes 32 and 33, drags with it the cylindrical pins 34 and 35 and then the shaped plates 36 and 37, whose retreats therefore allow the release from a condition below two teeth 38 and 39 (Figures 8d to 8g).

In this way, the lid 18 is free to rotate and to open up.

Upon release, the release button 31 thanks to a spring 40 will return to the position as well as the shaped plates 36 and 37 shown in the closed condition by additional elastic means 40a.

Released on the release button 31, it is also possible to push the flap 22, thereby blocking the safety closure system.

In use, once the supply of fuel is completed, it will be sufficient to extract the gun E to allow to the spring 21 pushing the cover 18 to move into the closed position.

In the step of rotation of the lid 18, the shepd plates 36 and 37 encounter, in the last section, the teeth 38 and 39: such teeth 38 and 39, being equipped at the top with a chamfer, cause the regression of the plates 36 and 37 thereof. Terminated the chamfer, the plates 36 and 37 move forward so as to engage the teeth 38 and 39 and creating the constraint that prevents the opening of the lid means T (Figs. 8e and 8g). In particular, the movement of the plates 36 and 37 is unlocked by the movement of the release button 31, thanks to a vent area 41 of a substantially triangular shape (Fig.8f).

According to the embodiment of Figures 1, 2a-2b, and 5a-5d, the body G of the device D is provided, on the outer cylindrical surface of the upper portion 1, with a screw thread 42 adapted to cooperate with a filler pipe B of the known threaded ring -type.

Therefore, the installation of the device D is simply performed by inserting the device D inside the pipe B of supply tank S and screwing it up to bring in a compression seal (not shown) positioned under the plate 17.

The inability to unscrew the device D is guaranteed by extracting a spool 43 adapted to keep pushed outwards a pin 44 that provides a bond with the ring of the filler pipe B.

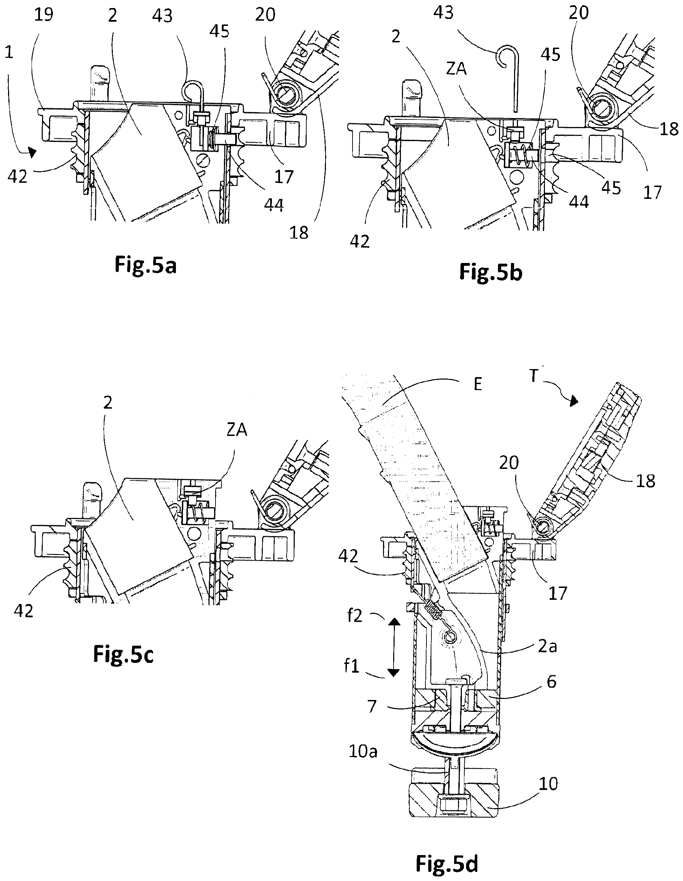

Extracted the spool 43, the pin 44, thanks to a spring 45, moves back releasing the bond with the ring (Figure 5b): once backward, the pin 44 is locked in position by a bolt ZA which descends by gravity preventing the pin 44 to go out (Figs. 5b and 5c). The whole device D is now free to rotate about its main axis, while the ring is firmly bound to the filler pipe B of the tank S, and the element C is free to slide coaxially with respect to the body G.

The extraction of the device D happens via a special key (not shown) to be inserted in the seat of the gun E.

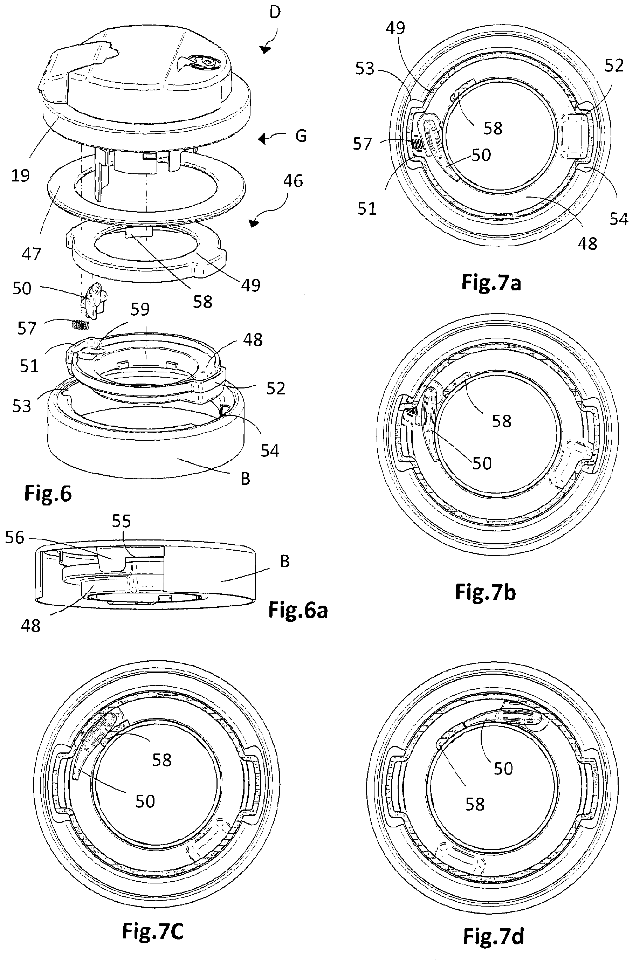

According to the alternative embodiment of Figures 6 and 6a, and 7a to 7d, the body G of the device D is provided with coupling means 46 suitable to cooperate with a filler pipe unions B of bayonet type. Therefore, the installation is performed by inserting the device D inside the filler pipe of the tank S, and turning it to snap it up till to bring in acompression a seal 47 placed under the plate 17.

The impossibility of disengagement of the device D is guaranteed by a mechanical lock which is manifested finished the cited bayonet-type rotation.

In particular, the coupling is effected by means of two ring nuts 48 and 49, with nut 48 secured to the body G and the nut 49 free; these nuts 48 and 49 are bound each other by a block tooth 50.

In use, as soon as the device D is inserted in the filler bayonet-type pipe B aligning two protrusions 51 and 52 with two slits 53 and 54 on the filler pipe B (Figure 6), a clockwise rotation of the device D is started.

As shown in Figure 6a, the nut 48 integral with the device D will follow the rotation by engaging an inclined plane 55 of the bayonet and drag down the device D in the compression bringing the seal 47. The rotation ends when the two protrusions 51 and 52 reach protrusions 56 of the inclined plane 55 of the filler pipe B.

The nut 49 is aligned with slits 53 and 54 because it does not fit entirely into the filler pipe B and is held in position by the same slits 53, 54.

Basically, as shown in Figures 7a to 7d (where for a better understanding to the nut 49 has been removed the top) the following steps occur:
a) insertion (Figure 7a)
b) starting the rotation: here it intervenes the tooth 50 which is inserted into the nut 48 via a cylindrical hole 59 which gives a rotation. The tooth 50 is maintained in thrust towards the center of the device D thanks to a spring 57 (Figures 6 and 7a)
c) the nut 49 is provided with a tooth 58 which during rotation is passed by the tooth 50 (Figures 7b, 7c e7D)
d) at the end of rotation of the device D, the tooth 50 will have passed over completely the tooth 58 and pushed by the spring 57 it will be positioned preventing a counterclockwise rotation. The final position of the nuts 48 and 49 is adapted to lock the protrusions 56 of the filler B thereby preventing rotations in both directions, clockwise and counterclockwise (Figure 7d).

## Claims

1. Safety lock closure device (D) for filler pipes (B) of vehicle fuel tanks (S), comprising a substantially cylindrical body (G) and cover means (T) to close said body (G), said body (G) being adapted to enclose a hollow tubular element (C), inside which is adapted to flow a flow (F) of fuel; said tubular element (C) being provided with an upper portion (1) having an inlet (2) for said fuel and a lower portion (3) supporting floating means (4,10); said tubular element (C) being slidably mounted coaxially on said body (G) **characterized in that** said tubular element (c) is slidably mounted on said body(G) with the interposition of opposition means (5), and said inlet (2) has a longitudinal axis (X) inclined by a determined angle (β) with respect to the longitudinal axis (Y) of said body (G).

2. Device according to claim 1, **characterized in that** said angle (β) is less than 35 °.

3. Device according to claim 1 or 2, **characterized in that** said angle (β) is equal to 28 °.

4. Device according to one or more of the preceding claims 1 to 3, **characterized in that** said opposition means (5) are elastic means.

5. Device according to one or more of the preceding claims 1 to 3, **characterized in that** said opposition means (5) are tie rod means.

6. Device according to one or more of the preceding claims 1 to 5, **characterized in that** said inlet (2) has its own lower part (2a) being convex curved with the concavity facing centrally to said tubular element (C).

7. Device according to claim 6, **characterized in that** the said lower part (2a) mounts support means (7,10a) for supporting anti-intrusion / anti burglary barrier means (6).

8. Device according to claim 7, **characterized in that** said anti-intrusion / anti-burglary barrier means (6) comprise a metal crown (6).

9. Device according to claim 7 or 8, **characterized in that** said support means (7,10a) further mount splitter means (9) adapted to divide said flow (F) of fuel into at least two sub-flows (F1 , F2) leaving out from said tubular element (C).

10. Device according to claim 7, 8 or 9, **characterized in that** said support means (7,10a) further mount in a sliding manner said floating means (4,10); said floating means (4,10) comprising a floater (10) and means (11,12) for opening / closing said lower portion (2a) of said body (G).

11. Device according to claim 10, **characterized in that** said means (11,12) for opening / closing comprise two wings (11,12), each wings (11, 12) being hinged to said support means (7,10a) and provided with a radial protrusion (13,14) cooperating with a respective seat (15, 16) of said floater (10) to be inserted, slide and finally to be locked in said seat (15, 16).

12. Device according to one or more of the preceding claims 1 to 11, **characterized in that** said cover means (T) comprise a plate (17) forming part of said body (G) and a lid (18) hinged to said plate (17), said lid (18) comprising safety lock mechanisms (19).

13. Device according to claim 12, **characterized in that** said safety lock mechanisms (19) includes a door (22) adapted to be rotated for access to a button (24) lock (23), a bolt (26) coupled to said button (24) and adapted to slide horizontally, said bolt (26) supporting two seats (27,28), each said seat (27,28) adapted to receive a respective tooth (29,30) presented in a release button (31); said release button (31) being provided with two inclined planes (32,33), each of which being adapted to engage a corresponding cylindrical pin (34,35) connected to a respective shaped plate (36,37).

14. Device according to one or more of the preceding claims 1 to 13, **characterized in that** said body (G) is provided, on its outer cylindrical surface, with a thread (42) adapted to cooperate with said filler pipe (B) of the threaded nut-type, and with spool means (43) adapted to keep pushed outwards a bond pin (44) for said filler pipe (B), said spool means (43) further being adapted to be removed to prevent the unscrewing of the said device (D) from said filler pipe (B).

15. Device according to one or more of the preceding claims 1 to 13, **characterized in that** said body (G) is provided with coupling means (46) adapted to cooperate with said filler pipe (B) of the bayonet-type; said coupling means (46) further comprising mechanical means adapted to block the disengagement of the said device (D) from said filler pipe (B) and defined by two ring nuts (48,49), of which a ring nut (48) secured to said body (G) and a free ring nut (49); said two ring nuts (48,49) being placed fixed relative to one another by a tooth (50) and being provided with protrusions (51,52) adapted to cooperate with respective slits (53,54) present on the filler pipe (B).

## Patentansprüche

1. Verschlussvorrichtung (D) mit Sicherheitsverriegelung für Füller (B) von Kraftstofftanks (S) in Fahrzeugen (V), **dadurch gekennzeichnet, dass** sie einen im wesentlichen zylindrischen Körper (G) und Mittel (T) umfasst, die mit einem zum Schließen des genannten Körpers (G) ausgestattet sind, wobei der genannte Körper (G) geeignet ist, das hohle rohrförmige Element (C) zu umschließen, innerhalb dessen eine Strömung (F) des genannten Brennstoffs fließen kann; wobei das genannte rohrförmige Element (C) einem oberen Teil (1), das eine Einlassmündung (2) des genannten Kraftstoffs aufweist, und einen unteren Teil (3) aufweist, der untere schwebende Stützmittel (4,10) unterstützt; wobei das genannte Element (C) koaxial auf dem genannten Körper (G) unter Zwischenschaltung von Kontrast-Mitteln (5) gleitend aufgebracht ist, und wobei die genannte Mündung (2) beim Eingang eine Längsachse (X) aufweist, die in einem Winkel (β) geneigt ist, der mit Bezug auf die Längsachse (Y) des Körpers (G) bestimmt wird.

2. Vorrichtung nach Anspruch 1, **dadurch gekennzeichnet, dass** der genannte Winkel (β) weniger als 35° beträgt.

3. Vorrichtung nach Anspruch 1 oder 2, **dadurch gekennzeichnet, dass** der genannte Winkel (β) 28° beträgt.

4. Vorrichtung nach einem oder mehreren der vorhergehenden Ansprüche 1 bis 3, **dadurch gekennzeichnet, dass** die genannten Kontrastmittel (5) elastische Mittel sind.

5. Vorrichtung nach einem oder mehreren der vorhergehenden Ansprüche 1 bis 3, **dadurch gekennzeichnet, dass** die genannten Kontrastmittel (5) mit Zugstangen ausgestattete Mittel sind.

6. Vorrichtung nach einem oder mehreren der vorhergehenden Ansprüchen 1 bis 5, **dadurch gekennzeichnet, dass** die genannte Einlassmündung (2) einen eigenen Unterteil (2a) mit einer gebogenen und konvexen Entwicklung mit einer zentral dem besagten Element (C) zugewandten Konkavität, aufweist.

7. Vorrichtung nach Anspruch 6, **dadurch gekennzeichnet, dass** der genannte untere Teil (2a) angebrachte Stützmittel (7, 10a) trägt, die mit eindring- oder einbruchhemmenden Barrieren ausgestattet sind.

8. Vorrichtung nach Anspruch 7, **dadurch gekennzeichnet, dass** die genannten Barriere-Mittel (6) eine Metallkrone (6) umfassen.

9. Vorrichtung nach Anspruch 7 oder 8, **dadurch gekennzeichnet, dass** die genannten Stützmittel (7, 10a) desweiteren aufgebrachte Teilungsmittel (9) tragen, die geeignet sind, den genannten Kraftstoffstrom (F) in mindestens zwei Teilströme (F1, F2) beim Ausgang aus dem genannten Element (C) zu verteilen.

10. Vorrichtung nach Anspruch 7, 8 oder 9, **dadurch gekennzeichnet, dass** die genannten Stützmittel (7,10a) desweiteren die genannten gleitend aufgebrachten Schwebemittel (4, 10) tragen; wobei die genannten Schwebemittel (4,10) einen Schwimmer (10) und Mittel (11,12) zum Öffnen/Schließen des genannten unteren Teiles (2) des genannten Körpers (C), umfassen.

11. Vorrichtung nach Anspruch 10, **dadurch gekennzeichnet, dass** die genannten Mittel (11,12) zum Öffnen/Schließen zwei Flügel (11,12) aufweisen, von denen jeder Flügel (11; 12) gelenkig an die genannten Stützmittel (7,10a) verbunden und mit einem radialen Vorsprung (13; 14) versehen ist, der in der Lage ist, mit einem relativen Sitz (15 des genannten Schwimmers (10) zusammenzuarbeiten, um in den genannten Sitz (15; 16) sich einzuführen, zu gleiten und am Ende zu blockieren.

12. Vorrichtung nach einem oder mehreren der vorhergehenden Ansprüche 1 bis 11, **dadurch gekennzeichnet, dass** die genannten Mittel (T) eine feste Platte (17) aufweisen, die ein Teil des genannten Körpers (G) ist und einen hohlen gelenkig mit der genannten Platte (17) verbundenen Deckel (18) umfassen; wobei der gennannte Deckel (18) Mechanismen (19) des Sicherheitsblocks umfasst.

13. Vorrichtung nach Anspruch 12, **dadurch gekennzeichnet, dass** die genannten Sicherheitsverriegelungsmechanismen (19) eine Tür (22) umfassen, die in der Lage ist gedreht zu werden, um Zugang einem Schloss (23) mit Druckknopf (24), einem mit dem genannten Druckknopf (24) verbundenen und in der Lage, horizontal zu gleiten verbundenem Riegel (26), wobei der genannte Riegel (26) zwei Sitze (27, 28) stützt, wobei jeder Sitz (27,28) ist in der Lage, einen entsprechenden Zahn (29, 30) aufzunehmen, der im Auslösungsdruckknopf (31) anwesend ist; wobei der genannte Auslösungsdruckknopf (31) mit zwei geneigten Ebenen (32, 33) ausgestattet ist, wobei von denen jeder ist in der Lage, sich mit einen entsprechenden zylindrischen Stift (34,35) zu verbinden, der mit einem jeweiligen geformten Blech (36,37) verbunden ist.

14. Vorrichtung nach einem oder mehreren der vorhergehenden Ansprüche 1 bis 13, **dadurch gekennzeichnet, dass** der genannte Körper (G) auf seiner eigenen äußeren zylindrischen Oberfläche ein Gewinde (42) aufweist, die geeignet ist, mit einem genannten Verschluss (B) nach Art einer Gewindemutter, zusammenzuarbeiten, und Spulen-Mittel (43) aufweist, die in der Lage sind, einen Verbindungszapfen (44) zusammen mit dem Ring des genannten Verschlusses (B) nach außen gedrängt zu halten, wobei die genannten Spulen-Mittel (43) sind in der Lage, entnommen zu werden, um das Abschrauben der genannten Vorrichtung (D) aus dem genannten Verschluss (B), zu verhindern.

15. Vorrichtung nach einem oder mehrere der vorhergehenden Ansprüchen 1 bis 13, **dadurch gekennzeichnet, dass** der genannte Körper (G) mit Einsatzmitteln (46) versehen ist, die in der Lage sind, mit einem genannten Verschluss (B) bajonettartig zusammenzuarbeiten; wobei die genannten Einsatzmittel (46) auch mechanische Sperrmittel umfasst, die in der Lage sind, das Ausrücken der genannten Vorrichtung (D) aus dem genannten Verschluss (B) mit Hilfe von zwei Ringen (48, 49) zu blockieren, wobei ein Ring (48) mit dem genannten Körper (G) und mit einem freien Ring (49) verbunden ist; wobei die genannten zwei Ringe (48, 49) durch einen Sperrzahn (50) relativ zueinander befestigt und mit Vorsprüngen (51, 52) versehen sind, die in der Lage sind, mit entsprechenden Schlitzen (53,54), die auf dem Verschluss (B) anwesend sind, zusammenzuarbeiten.

## Revendications

1. Dispositif de fermeture (D) avec un verrouillage de sécurité pour des unions (B) de réservoirs de carburant (S) dans des véhicules (V), **caractérisé en ce qu'**il comprend un corps (G) sensiblement cylindrique et des moyens (T) comme un couvercle de fermeture dudit corps (G), ledit corps (G) étant apte à enfermer un élément tubulaire creux (C), à l'intérieur duquel peut s'écouler un flux (F) dudit carburant; ledit élément tubulaire (C) étant pourvu d'une partie supérieure (1) ayant une embouchure d'entrée dudit carburant (2) et une partie inférieure (3) supportant des moyens (4,10) flottants; ledit élément (C) étant monté coulissant de manière coaxiale sur ledit corps (G) avec l'interposition de moyens (5) de contraste, et ladite embouchure (2) d'entrée présente un axe (X) longitudinal incliné par un angle (β) déterminé par rapport à l'axe longitudinal (Y) dudit corps (G).

2. Dispositif selon la revendication 1, **caractérisé en ce que** ledit angle (*β*) est inférieur à 35°.

3. Dispositif selon la revendication 1 ou 2, **caractérisé en ce que** ledit angle (β) est égal à 28°.

4. Dispositif selon l'une ou plusieurs des revendications précédentes 1 à 3, **caractérisé en ce que** lesdits moyens (5) de contraste sont des moyens élastiques.

5. Dispositif selon l'une ou plusieurs des revendications précédentes 1 à 3, **caractérisé en ce que** lesdits moyens (5) de contraste sont des moyens avec une la barre de traction.

6. Dispositif selon l'une ou plusieurs des revendications précédentes 1 à 5, **caractérisé en ce que** ladite embouchure d'entrée (2) a une propre partie inférieure (2) avec un développement courbe et convexe avec une concavité disposée centralement par rapport audit élément (C).

7. Dispositif selon la revendication 6, **caractérisé en ce que** ladite partie inférieure (2a) porte des moyens de support (7,10a) montés de moyens (6) avec une barrière anti-intrusion/anti-effraction.

8. Dispositif selon la revendication 7, **caractérisé en ce que** lesdits moyens (6) formant une barrière comprennent une couronne métallique (6) .

9. Dispositif selon la revendication 7 ou 8, **caractérisé en ce que** lesdits moyens (7,10a) de support portent en outre montés des moyens (9) diviseurs destinés à diviser ledit flux de carburant (F) en au moins deux fluxes secondaires (F1, F2) en sortie dudit élément (C).

10. Dispositif selon la revendication 7, 8 ou 9, **caractérisé en ce que** lesdits moyens (7,10a) de support portent en outre montés de façon coulissante lesdits moyens flottants (4,10); lesdits moyens flottants (4,10) comprennent un flotteur (10) et des moyens (11,12) pour l'ouverture/fermeture de ladite partie (2) inférieure dudit corps (C).

11. Dispositif selon la revendication 10, **caractérisé en ce que** lesdits moyens (11; 12) d'ouverture/fermeture comprennent deux ailes (11,12), chacune des ailes (11; 12) étant articulée sur lesdits moyens (7,10a) de support et étant pourvue d'une saillie (13; 14) radiale apte à coopérer avec un siège relatif (15; 16) dudit flotteur (10), pour s'insérer, coulisser et enfin se bloquer sur ledit siège (15; 16).

12. Dispositif selon l'une ou plusieurs des revendications précédentes 1 à 11, **caractérisé en ce que** lesdits moyens (T) comprennent une plaque (17) fixe faisant partie dudit corps (G) et un couvercle (18) creux articulé sur ladite plaque (17); ledit couvercle (18) comprend des mécanismes (19) d'un bloc de sécurité.

13. Dispositif selon la revendication 12, **caractérisé en ce que** lesdits mécanismes (19) du bloc de sécurité comprennent une petite porte (22) adaptée pour être mise en rotation pour l'accès à une serrure (23) à bouton-poussoir (24), un verrou (26) couplé audit bouton-poussoir (24) et apte à coulisser en horizontale, ledit verrou (26) supportant deux sièges (27, 28), chacun desdits sièges (27,28) étant apte à recevoir une dent respective (29, 30) présents et dans un bouton-poussoir (31) de déblocage; ledit bouton-poussoir (31) étant pourvu de deux plans inclinés (32, 33), chacun d'eux étant apte à s'engager avec une respective tige cylindrique (34,35) reliée à une respective plaque (36,37) profilé.

14. Dispositif selon l'une ou plusieurs des revendications précédentes 1 à 13, **caractérisé en ce que** ledit corps (G) est pourvu, sur sa propre face cylindrique extérieure, d'un filetage (42) apte à coopérer avec une desdites unions (B) du type avec écrou fileté, et des moyens (43) à bobine, qui sont aptes pour maintenir poussée vers l'extérieur un pivot de liaison (44)avec ledit écrou de ladite union (B), lesdits moyens (43) à bobine étant aptes pour être enlevés pour empêcher le dévissage dudit dispositif (D) de ladite union (B) .

15. Dispositif selon l'une ou plusieurs des revendications précédentes 1 à 13, **caractérisé en ce que** ledit corps (G) est pourvu de moyens (46) d'accouplement aptes à coopérer avec une desdites unions (B) du type à baïonnette; lesdits moyens (46) d'accouplement comprenant en outre des moyens de blocage mécanique aptes à bloquer le dégagement dudit dispositif (D) de ladite union (B) au moyen de deux écrous (48, 49), dont un écrou (48) est contraint sur ledit corps (G) et un écrou (49) est libre; lesdits deux écrous (48, 49) étant fixés l'un par rapport à l'autre par une dent (50) du blocage et étant pourvues de saillies (51, 52), aptes à coopérer avec des fentes respectives (53, 54) présentes sur l'union (B).
